Europäisches Patentamt

European Patent Office

Office européen des brevets

(19)

(11) Publication number: **0 181 086**
**A2**

(12) **EUROPEAN PATENT APPLICATION**

(21) Application number: **85307004.3**

(22) Date of filing: **01.10.85**

(51) Int. Cl.⁴: **B 05 C 5/04**
**B 05 C 17/00, B 29 C 45/58**
**H 02 G 1/14**

(30) Priority: **01.11.84 CA 466884**

(43) Date of publication of application:
**14.05.86 Bulletin 86/20**

(84) Designated Contracting States:
**DE FR GB SE**

(71) Applicant: **NORTHERN TELECOM LIMITED**
**1600 Dorchester Boulevard West**
**Montreal Quebec H3H 1R1(CA)**

(72) Inventor: **Charlebois, Leonard Joseph**
**144 Paddock Way**
**Kanata Ontario, K2L 1K5(CA)**

(74) Representative: **Spencer, Graham Easdale et al,**
**A.A. Thornton & CO Northumberland House 303-306,**
**High Holborn**
**London WC1V 7LE(GB)**

(54) **Moulding of plastics encapsulations.**

(57) Dispensing molten plastic material to mould an encapsulation around an article wherein the material is expelled from the outlet of a container (10) by a piston (34) having an annular polymeric resilient seal (50) which surrounds the piston and engages the wall of a reservoir of the container. The seal engages the plastic material and sweeps it from the container. The piston of the container preferably has two outwardly resilient annular polymeric seals (50) to intimately engage the reservoir well and a bearing means (62) disposed between the seals prevents sideways movement of the piston.

FIG. 3

This invention relates to the moulding of plastics encapsulations.

In some industries, it is necessary for operators working in the field to seal articles, for instance, against the effects of ambient conditions. Various methods of sealing have been suggested and one which has recently been proposed and has been successfully used is the method of sealing by providing a mould which surrounds the article and an encapsulation is formed around the article by transferring heated molten plastics material into the mould cavity and allowing it to cool and set. Encapsulations formed by moulding techniques have successfully been employed in the telecommuncations cable industry. In the telecommuncations cable industry, it is necessary to form splices in the field and this involves cutting into a cable to enable the conductors to be reached. The conductors are then severed and connected to other wires leading from the cable. It is then necessary to seal around the area of the splice to prevent the connections between the conductors from being adversely affected by atmospheric conditions, such as dampness, or affected by moisture conditions such as is found surrounding underground cables. The use of polymeric materials, as moulded encapsulations around such splices, has simplified previous encapsulation procedures and also has cheapened the encapsulation process.

Successful methods of sealing, including moulded encapsulations, have been described in U.S. patent numbers 4,152,539, granted May 1, 1979, and 4,322,573, granted May 13, 1982, both patents being in the name of Leonard J. Charlebois.

Difficulties have been discovered in the provision of

- 1 -

encapsulations in the field because no ready machinery has been available for the forming of encapsulations and it has been impractical to consider using factory equipment in the field. This problem is discussed in a copending U.S. patent application serial number 527,759, filed August 30, 1983, and in corresponding Canadian application serial number 435,860, filed September 1, 1983 and entitled "Methods and Apparatus for Sealing Articles", in the names of Leonard J. Charlebois, Renato Mariani and Fred A. Huszarik. Described in these applications, plastics material is heated to a molten state by being extruded from extruders while being forced through the inlet of a reservoir defined within a manually portable accumulator. The material is maintained at a flowable temperature while held within the reservoir and the reservoir is disposed in communication with a mould cavity partly defined by the article to be sealed. The accumulator then acts as a dispensing container to force the molten material into the mould cavity at a sufficiently fast rate to fill the cavity before flow passages into the cavity become blocked with hardening material. This process and use of the dispensing container avoids the problems in using extruders for the mould cavity filling operation as discussed in the above two patent applications.

In addition to this, in a patent application filed concurrently with this application, entitled "Encapsulating Articles", in the name of Leonard J. Charlebois, a method of encapsulating an article is described in which solid plastics material is placed directly into a cylindrical dispensing container, the material then being heated to render it homogeneous. After allowing for the gases in the material to escape, the container is placed in communication with a

- 2 -

mould cavity for the purpose of filling the cavity.

In the use of the dispensing containers as described in the above applications, a piston is employed to sweep the reservoir for the purpose of transferring the plastics material into the mould cavity. The use of a piston instead of an extruder is to ensure that the mould cavity is filled at a much faster rate than would be possible with the small extruders which are available for use in field applications, thereby avoiding a slowness of filling which results in an inferior encapsulation having laminated sections which are structually weak and are subject to cracking. However, there are problems in the use of a piston-operated device in that, in dispensing viscous plastics material, jamming of the piston may occur within the cylinder caused by plastics material adhering to the cylinder walls or bypassing piston rings.

In addition, if a dispensing container is to be manually carried and operated, it is obviously advantageous for it to be as light in weight as is practical commensurate with its operating requirements. Dispensing containers constructed of steel and in the manner described in U.S. patent application number 527,759 and corresponding Canadian application 435,860, referred to above, had a weight in the region of 44 pounds (unfilled) for a plastics capacity of 125 cubic inches. In further containers of similar design and made from aluminum instead of steel, the cubic capacity was increased to 175 cubic inches, but the weight of the container was still 43 pounds.

The present invention provides a method of moulding a plastics encapsulation around an article and a dispensing container for plastics material in use of which the above disadvantages are reduced.

Accordingly, the present invention provides a method of moulding a plastics encapsulation around an article comprising:-

providing a quantity of plastic material within a cylindrical reservoir of a dispensing container;

disposing the container with the reservoir in communication with a mould cavity partly defined by the article to be encapsulated;

moving a piston along the reservoir to force the material from the chamber and into the mould cavity while engaging the plastic with an annular polymeric resilient seal which surrounds the piston and is urged into engagement with the wall of the reservoir; and

sweeping the plastic from the reservoir wall by means of the seal during piston movement.

The above method produces a surprising result in that it has been found that with the use of a resilient polymeric seal of annular configuration, the plastic material does not harm the seal and with the seal urged into engagement with the wall of the reservoir, the seal acts efficiently to remove the molten plastics material from the reservoir wall. Further to this, the seal does not have a split as is the case with a metal expandable piston ring, through which the plastics material may pass and which would be likely to cause jamming of the piston within the cylinder.

The seal may be provided with a lip, the free end of which engages the reservoir wall and faces the plastics material so as to be pressed against the wall by the pressure of the plastics material during piston operation. The lip may be provided upon a seal which is

- 4 -

of U-shape configuration in cross-section, the two arms of the U-shape carrying between them an annular spring which assists in forcing the lip outwardly onto the cylinder wall. Alternatively, the seal may be of O-ring configuration in cross-section, in which case it loosely fits around the piston so as to be urged against the cylinder wall by pressure from molten plastic passing inwardly of the seal and between the seal and the piston to engage radially inner regions of the surface of the seal.

The invention also provides a dispensing container for dispensing plastic material, the container defining a cylinder and comprising a fluid pressure-operated piston movable along the cylinder and dividing the cylinder into a cylindrical reservoir for plastics material on one side of the piston and a fluid pressurizable chamber on the other side of the piston, the reservoir having an outlet for molten plastics material and the chamber having means for increasing and decreasing fluid pressure within the chamber, and the piston provided with:-

at least two annular polymeric seals which are outwardly resilient to engage the cylinder wall to sweep the plastic material from the cylinder wall while it is being dispensed; and

bearing means disposed between the seals and engaging the cylinder wall to hold the piston substantially concentric with the cylinder.

With the container according to the invention, because of the fluid pressure operated piston, the use of a connecting rod and associated driving mechanism for moving the piston is avoided thereby reducing the overall weight of the container. As the seals are

0181086

resilient, the bearing operates to prevent radial movement of the piston out of its concentric position thereby stabilizing the piston to enable the seals to provide an efficient and continuous sealing action against the cylinder walls.

Embodiments of the invention will now be described by way of example, with reference to the accompanying drawings in which:-

Figure 1 is an isometric view, partly in cross-section, showing a dispensing container attached to a mould while plastics material is being injected into the mould cavity;

Figure 2 is a cross-sectional view in side elevation of the dispensing container;

Figure 3 is a view similar to Figure 2, but on larger scale, of part of the container and showing a piston used in the container with the piston partly in section; and

Figure 4 is a cross-sectional view of part of a piston used in a container of a second embodiment.

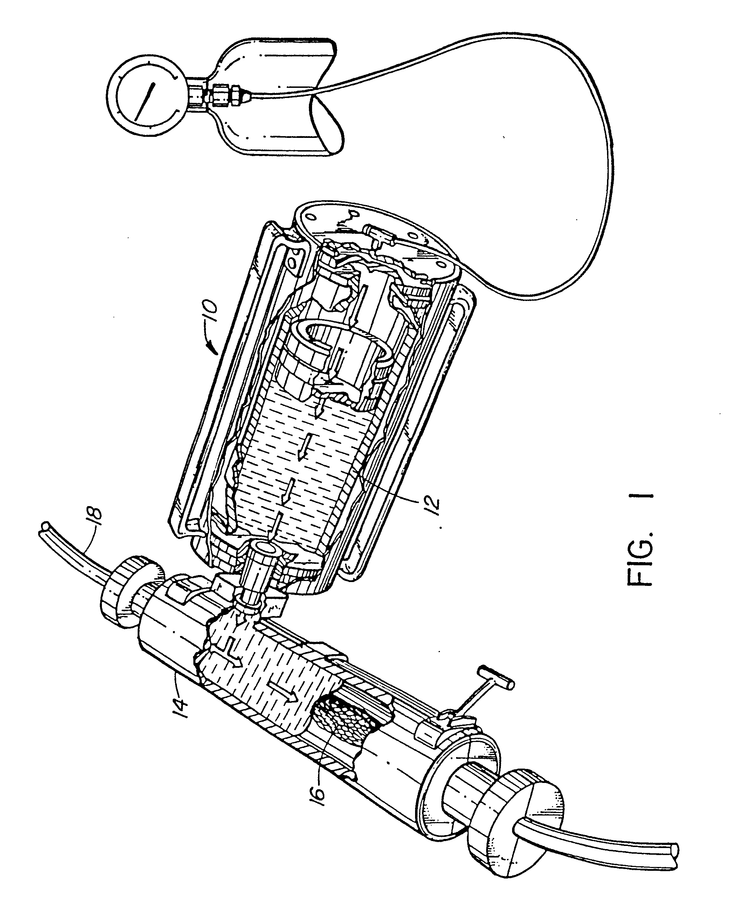

As shown in Figure 1, a dispensing container 10 contains a quantity of plastics material 12 which is being dispensed into a mould 14 for forming an encapsulation around a spliced region 16 of a cable 18. The plastics material may be provided by the method described in a patent application filed concurrently herewith and entitled "Encapsulating Articles", in the name of Leonard J. Charlebois, or it may be provided by the method described in U.S. patent application number 527,759, filed August 30, 1983, and corresponding Canadian application serial number 435,860, filed September 1, 1983, entitled "Methods and Apparatus for Sealing Articles", in the names of Leonard J. Charlebois, Renato Mariani and Fred A. Huszarik. In the

0181086

method disclosed in the application referred to above and filed concurrently herewith, the plastics material is loaded into the dispensing container in solid form and is heated to render it homogeneous. After gases in the material have been allowed to escape then the moulding operation takes place. In the latter two applications referred to above, the dispensing container forms an accumulator for plastics material received into it from an extruder which melts the plastics material as it is being extruded and forced into the dispensing container. The mould 14 is a low pressure mould, i.e. it operates below 100 pounds per square inch pressure, and may be of the construction described in U.S. patent numbers 4,152,539 and 4,322,573. The mould is disposed in a normal setting for an in situ moulding operation, that is, at the bottom of a pit in the ground for encapsulating and sealing splices formed in an underground cable.

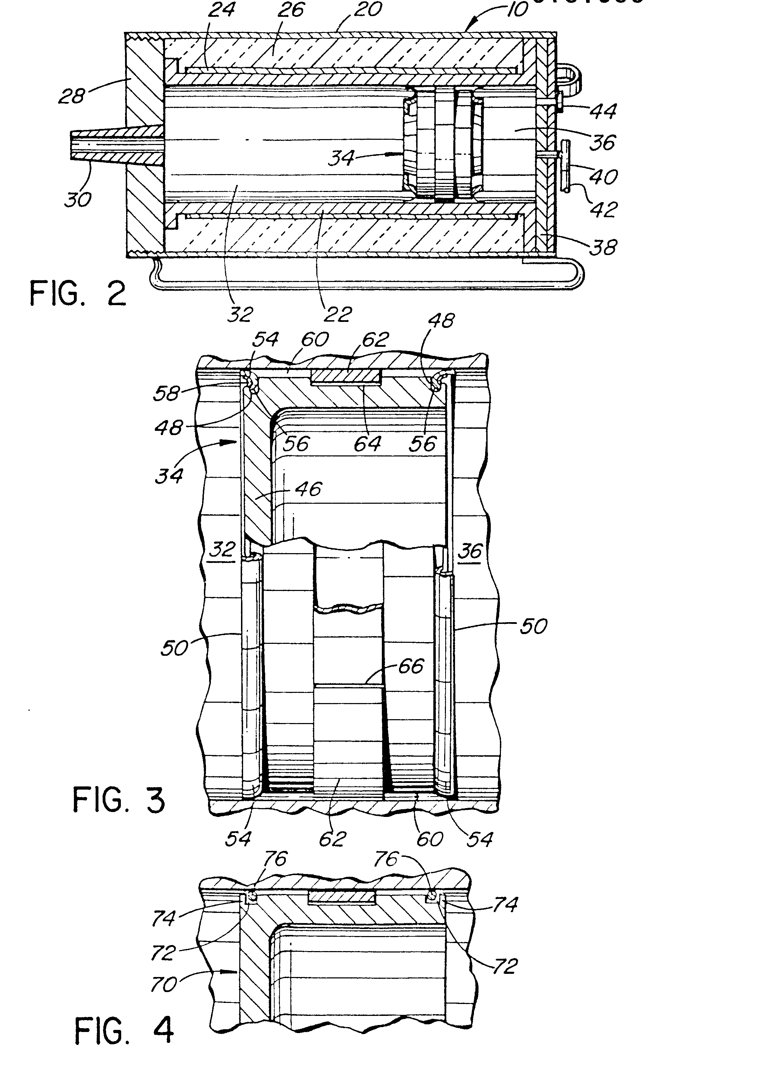

As shown by Figure 2, dispensing container 10 comprises a cylindrical body 20 housing an aluminum cylinder 22. Between the body and the cylinder are located a heating means, in the form of an electrical heating element 24, which encircles the cylinder, and a heat insulating means which encircles the heating element and is in the form of a glass wool insulation 26 or other insulating material. One end of the body 20 screw threadably receives an end plate 28 which carries an outlet 30 defining an outlet orifice for a cylindrical reservoir 32 defined by the cylinder 22 and lying at one side of a double-acting piston 34. On the other side of the piston is a fluid pressurizable chamber 36 which is also defined by the cylinder 22. The other end of the cylinder 22 is closed by an end wall 38. The end wall carries means for increasing and decreasing fluid pressure within the chamber

- 7 -

36. This means is in the form of a gas pressure inlet 40 to provide pressurized gas or air through a flexible tube 42 and a pressure relief valve 44 extending through the end wall 38.

As may be seen from the above, with the piston operated by fluid pressure, then this dispenses with any mechanical operating mechanism such as a connecting rod and driving means, as is described in the previous patents and applications. This results in a drastic reduction in weight for any particular design and size of the dispensing container. For instance, with a container which has been constructed according to this embodiment, the cylinder is sufficiently large to provide a cubic capacity of 364 cubic inches for molten plastic while the container itself weighs less than 30 pounds. The design of the piston, which is now to be described, also assists in this weight reduction as it is an axially short piston compared to it diameter while the piston remains stabilized concentrically within the cylinder without any twisting effect. The piston in this embodiment has an axial length of approximately 2 inches and a diameter of approximately 6 inches.

The piston 34 is cup shaped and has a single end wall 46 which provides a flat surface facing into the reservoir 32. Each end of the piston is relieved by an annular peripheral recess 48 for carrying seal means comprising an annular polymeric resilient seal 50 in each groove. Each seal 50 comprises a resilient polymeric seal member 52 of U-shaped cross-section, as shown in Figure 3. Each seal member has two arms 54 and 56 which hold between them a spring urging the arms apart. The outer of the arms 54 forms a lip which, as shown in Figure 3, is resiliently pressed against the cylinder all.

- 8 -

Because the two sealing means are of a resilient nature and the piston is spaced slightly from the cylinder wall to form an annular gap 60, as shown, then some means is required to stabilize the piston within the cylinder so as to hold it concentric and prevent any twisting. This means is in the form of a bearing means disposed between the two seals. As shown, this bearing means is a resilient polytetrafluorethylene ring 62 which is housed partly within a recess 64 of the piston. This ring is formed with one split 66 which extends axially so that the ring is not continuous. The ring is, however, resilient in a radially outward direction so that it will engage the cylinder wall to stabilize the piston in position while presenting a low friction surface contact with the cylinder wall. Instead of the the use of a single ring, such as the ring 62, it is to be understood that two or more axially spaced rings may be employed.

Thus, with the construction of the piston described with reference to Figure 3, the annular seals 50 are devoid of any gap through which the molten plastics material may flow and which could result in sticking or jamming of the piston within the cylinder. However, because of the resilient nature of the seals, they cannot ensure that the piston is held in a concentric relationship with the cylinder. The split ring 62 provides this function and while this has the axial split 66 the seals prevent this from being contacted by the molten plastics material to cause jamming.

In use of the first embodiment, with the molten plastics material in the reservoir 32, it is dispensed by the application of gas pressure into the chamber 36 which moves the piston towards the left, as shown in Figure 3. The springs 58 old the lip formed by the outer legs 54 of the seals against the cylinder walls to provide the sealing action. However, in addition to this, with regard to the seal confronting the chamber 36, extra pressure is provided against the lip by the pressurized fluid in the chamber so that pressurized fluid cannot flow past the lip. Surprisingly, it has been found that the lip formed by the outer leg 54 of the seal and confronting the reservoir 32 successfully prevents the molten plastics material from adhering to the cylinder wall as the piston moves along the cylinder. In fact, the lip scrapes the molten material from the cylinder as it moves to dispense the molten material whereby the piston does not tend to jam or otherwise stick in position within the cylinder. Such an action would not be reliable if seals were provided in the form of conventional piston rings which would contact the liquid material flow into the axial splits of the rings to enable this to flow into the jam the piston. As can be seen, however, in this embodiment the two types of designs are employed, i.e. a continuous annular polymeric seal to provide the sealing action and a split resilient ring means for piston stabilization, the polymeric seal protecting the resilient ring from contact with the molten material. It has been found that the combination of these two features provides a workable piston operation in the type of working environment for which it is required, i.e. for use in dispensing molten plastics material during a moulding operation.

In a second embodiment, shown with reference to Figure 4, the construction and operation of a dispensing container is similar to that described in the first embodiment except that the piston in the second embodiment is of slightly different construction. As shown in

- 10 -

the second embodiment, the ends of the piston 70 are relieved with two grooves 72 which are slightly spaced from the piston ends by a lip 74. Each groove 72 contains a polymeric resilient sealing means in the form of a sealing ring 76 of 'O' cross-section. This ring, in each case, is loosely contained within the groove so that it is of sufficiently large diameter to be held against the cylinder wall during operation. Also, the diameter of the ring is such that it leaves an axial gap between itself and one end of the groove 72.

In use of the container of the second embodiment, the fluid pressure in the chamber 36 operates against a larger surface area on the radially inner regions of the ring 76 than at the outer regions which contact the cylinder wall and hence the seal is held in sealing engagement against the wall as shown. A similar action is found to take place with regard to the other ring 76 by virtue of the pressure created by the viscous plastics material. It is found that with this latter ring pressed against the cylinder wall, also as shown, then it successfully moves along the wall so as to peel molten plastics material from around the wall during dispensing.

The embodiments of the invention in which an exclusive property or privilege is claimed are defined as follows:-


1.  A method of moulding a plastics encapsulation around an article comprising

providing a quantity of molten plastic material within a cylindrical reservoir (32) of a dispensing container (10) and

disposing the container with the reservoir in communication with a mould cavity partly defined by the article to be encapsulated characterized in that the method further comprises

moving a piston along the reservoir to force the material from the reservoir and into the mould cavity while engaging the plastic material with an annular polymeric resilient seal which surrounds the piston and is urged into engagement with the wall of the reservoir, and sweeping the molten plastic material from the reservoir wall by means of the seal during piston movement.


2.  A dispensing container (10) for dispensing molten plastic material, the container defining a cylinder (22) characterized in that the container comprises a fluid pressure operated piston (34) movable along the cylinder and dividing the cylinder into a cylindrical reservoir (32) for plastics material on one side of the piston and a fluid pressurizable chamber (36) on the other side of the piston, the reservoir having an outlet (30) for molten plastics material and the chamber having means (40,42,44) for increasing and decreasing fluid pressure within the chamber, and the piston is provided with:-

at least two annular polymeric seals (50) which are axially spaced apart along the piston and are outwardly resilient to engage the cylinder wall; and

bearing means (62) disposed between the seals and engaging the cylinder wall to hold the piston substantially concentric with the cylinder.

3. A dispensing container according to claim 2 characterized in that the annular seal (50) to sweep the plastic material from the cylinder wall is provided with a resilient plastics lip (54) having a free end directed towards the reservoir and engaging the cylinder wall, the lip being resiliently held against the cylinder wall.

4. A dispensing container according to claim 3 characterized in that the bearing means comprises a radially outwardly resilient ring (62) which is formed with an axial split (66), encircles the piston and slidably engages the cylinder wall.

5. A dispensing container according to claim 2 characterized in that the seal for sweeping the plastic material is of annular configuration, is of O-shape in axial cross-section and is disposed within an annular groove (48) of the piston, the seal having a diameter sufficient to contact the cylinder wall without being constrained against the bottom of the groove and also having a diameter such that it is spaced away from one end of the groove.

FIG. 1

0181086

FIG. 2

FIG. 3

FIG. 4